(19) Europäisches Patentamt

European Patent Office

Office européen des brevets

(11) **EP 2 770 599 B1**

(12) **EUROPEAN PATENT SPECIFICATION**

(45) Date of publication and mention
of the grant of the patent:
**14.11.2018 Bulletin 2018/46**

(51) Int Cl.:
*H02J 3/00* (2006.01)   *G06F 17/11* (2006.01)
*H02J 3/06* (2006.01)

(21) Application number: **14153841.3**

(22) Date of filing: **04.02.2014**

(54) **Method for optimizing power flow in electric power network**

Verfahren zur Optimierung des Stromflusses in Stromversorgungsnetz

Procédé d'optimisation de flux de puissance dans un réseau d'alimentation électrique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2013 US 201313775589**

(43) Date of publication of application:
**27.08.2014 Bulletin 2014/35**

(73) Proprietor: **Mitsubishi Electric Corporation
Chiyoda-ku
Tokyo 100-8310 (JP)**

(72) Inventor: **Raghunathan, Arvind U.
Brookline, MA Massachusetts 02445 (US)**

(74) Representative: **Pfenning, Meinig & Partner mbB
Patent- und Rechtsanwälte
Theresienhöhe 11a
80339 München (DE)**

(56) References cited:
- GOPALAKRISHNAN A ET AL: "Global optimization of Optimal Power Flow using a branch & bound algorithm", 2012 50TH ANNUAL ALLERTON CONFERENCE ON COMMUNICATION, CONTROL, AND COMPUTING, 1-5 OCTOBER 2012, ALLERTON HOUSE, UIUC, ILLINOIS, USA, 1 October 2012 (2012-10-01), pages 609-616, XP032345053, DOI: 10.1109/ALLERTON.2012.6483274 ISBN: 978-1-4673-4537-8
- Nogales F J et al: "A decomposition methodology applied to the multi-area optimal power flow problem", Annals of Operations Research, April 2003 (2003-04), pages 99-116, XP055202887, Dordrecht DOI: 10.1023/A:1023374312364 Retrieved from the Internet: URL:http://search.proquest.com/docview/214 507482
- PANCIATICI P ET AL: "Advanced optimization methods for power systems", 2014 POWER SYSTEMS COMPUTATION CONFERENCE, 18-22 AUGUST 2014, 18 August 2014 (2014-08-18), pages 1-18, XP055199994, DOI: 10.1109/PSCC.2014.7038504 ISBN: 978-8-39-358013-2

## Description

### Field of the Invention

The present invention relates generally to electric power networks, and more particularly to optimizing the power flows in the networks.

### Background of the Invention

An electric power network includes buses connected to transmission lines. The buses are locally connected to generators and loads. Optimal power flow (OPF) analysis is often used for monitoring and controlling the operation of the network. The power flow depends, in part, on voltage magnitudes and phase angles. Power flows and voltage levels on the buses are optimized by minimizing an objective function subject to constraints, such as the magnitudes, phases, power transferred, generator capacity, thermal losses, and the like.

Most conventional OPF optimizations:

(i) Solve the problem in a centralized manner.
(ii) Do not exploit a topology of the network to distribute the optimization over the buses.

Some conventional methods for distributing the optimization problem:

(i) Use the Schur complement method, also called iterative substructuring, to distribute the computation of a single step in the optimization problem.
(ii) When the optimization problem is distributed by dual decomposition, a conventional subgradient method is used for solving the optimization problem. The subgradient method converges sub-linearly to a solution.

Thus, there remains a need to optimize power flows in electric power networks in an efficient and expedient manner by appropriately distributing the computations.

U.S. Patent 6,625,520 describes a system and method for operating an electric power system that determines optimal power flow and available transfer capability of the electric power system based on the optimal power flow. The system derives data associated with an initial phase angle and maximum electric power value of a generator by determining mechanical output and electrical output of a generator, including a generator phase angle defined by a time function with a constraint condition that the generator phase angle does not exceed a preset value.

A further method to optimize power flow in an electric power network is disclosed in GOPALAKRISHNAN A ET AL: "Global optimization of Optimal Power Flow using a branch & bound algorithm",2012 50TH ANNUAL ALLERTON CONFERENCE ON COMMUNICATION, CONTROL, AND COMPUTING, 1-5 OCTOBER 2012, ALLERTON HOUSE, UIUC, ILLINOIS, USA, 1 October 2012 (2012-10-01).

### Summary of the Invention

The embodiments of the invention provide methods for optimizing power flows in electric power networks using a decomposition and coordination procedure. The decomposition procedure distributes the optimization problem into a set of smaller disjoint parameterized optimization problems that are independent of each other. The coordination procedure modifies the parameter associated with the individual problems to ensure that a solution of the entire problem is attained.

The methods are based on dualizing coupled constraints to obtain the set of smaller decoupled optimization problems. In one embodiment of the method, the theory of semi-smooth equations is used in the coordination procedure. The semismooth equation theory ensures that superlinear convergence can be theoretically guaranteed in a neighborhood of the solution. Further, the theory allows for using a merit function to ensure global convergence to a solution using initial parameters that are not near the solution.

In one embodiment, the theory of smoothing based methods is used to solve the decomposed problems. A monotonic decrease of the smoothing parameter is used to ensure that superlinear convergence can be theoretically guaranteed in the neighborhood of a solution. Further, the theory allows for using a merit function to ensure global convergence to a solution even when the initial parameters are far from optimal.

### Brief Description of the Drawing

Fig. 1 is a schematic of an electric power network and a graph representing the network that can be used by embodiments of the invention;

Fig. 2 is a flow chart of a conventional power optimization method;

Fig. 3 is a flow chart of a power optimization method according to embodiments of the invention; and

Fig. 4 and 5 are pseudo code for power optimization methods according to some embodiments of the invention.

**Detailed Description of the Preferred Embodiments**

**Electrical Power Network Topology and Representative Graph**

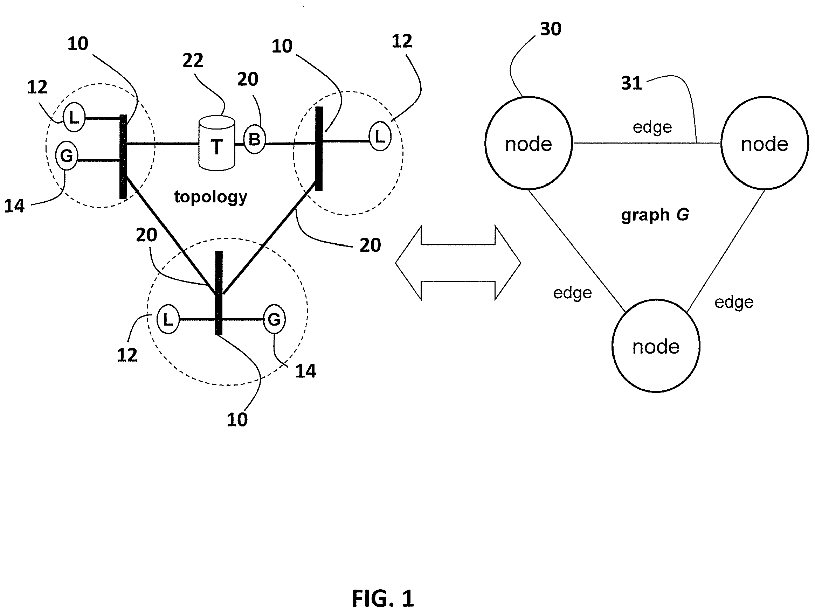

Fig. 1 shows a topology of an electric power network that can use embodiments of the invention. The network can include AC components, and DC components connected by convertors. The only requirement is that variables and constraints that control the operation of the network are continuously controllable.

The network includes buses 10 locally connected to loads (L) 12 and generators (G) 14. The buses are interconnected by transmission lines 20, also known as branches (B). Some of the transmission lines can be connected to transformers (T) 22.

The generators supply active power (measured in, e.g., Mega Watts (MW)), and reactive power (measured in Mega Volt Ampere Reactive (MVar)). The loads consume the power. The power is defined by voltage magnitude and phase angle.

The parameters for the optimization include, but are not limited to, an admittance matrix based on the branch impedance and bus fixed shunt admittance, and the flow capacity ratings, i.e., the maximal total power flow constrained by thermal ratings.

The topology of the network can be represented by a graph $G$ of nodes (generators and connected loads) 30 connected by edges (transmission lines) 31.

**Input**

Input to the method optimization includes the following:

1) A graph $G(N, E)$ with a set of $N$ nodes connected by a set of $E$ edges $(i, j)$.

2) An admittance of the lines $y_{ij} = g_{ij} + jb_{ij} \ \forall (i, j) \in E$, where g represents conductance of the line, $b$ represents susceptance (imaginary part of the admittance) of the line with $j = \sqrt{-1}$.

3) Constraints on active power $P_i^{G,\min}$, $P_i^{G,\max} i \in N$ that can be produced by the generators, and the reactive power $Q_i^{G,\min}$, $Q_i^{G,\max} \forall i \in N$ that can be produced by the generators.

4) Constraints $S_{ij}^{\max}$, $P_{ij}^{\max} \forall (i, j) \in E$ on apparent and active power transferred on the lines.

5) Limits $V_i^{\min}$, $V_i^{\max} \forall i \in N$ on voltage magnitudes at the buses.

6) Constraints $L_{ij}^{\max} \forall (i, j) \in E$ on thermal losses on the lines.

**Output**

Output of the method includes complex valued voltages $V_i \forall i \in N$ at the buses, and active and reactive power levels $P_i^G$, $Q_i^G \forall i \in N$ of the generators.

The optimization uses a decision function $f(P^G, Q^G, V)$ that depends on active power generation variables $P^G = (P_1^G, ..., P_{|N|}^G)$, reactive power generation variables $Q^G = (Q_1^G, ..., Q_{|N|}^G)$, and the com-

plex valued voltages $V = (V_1,...,V_{|N|})$ at the buses.

**Optimal Power Flow**

The form of the decision function *f* is quadratic and strictly increasing:

$$f(P^G, Q^G, V) = \sum_{i \in N}(c_{2i}(P_i^G)^2 + c_{1i}P_i^G + c_{0i}),$$

where c indicates constants, with $c_{2i}, c_{1i} \geq 0 \forall i \in N$.

To model the limits of feasible operation of the network, equality constraints, inequality constraints, and bounds on the decision variables are used. The operation of the electrical network can be modeled by the equality constraints

$$h_n(P^G, Q^G, V) = 0 \forall n = 1,..., Ne,$$

where *Ne* indicates the number of equality constraints.

The constraints on the limits on power generated by generators, limits on voltage magnitudes at the buses, power transferred on the lines and thermal losses ensuring feasible operation are modeled as inequality constraints

$$g_n(P^G, Q^G, V) \leq 0 \forall n = 1,..., Ni,$$

where *Ni* indicates the number of inequality constraints.

To determine the voltages at the buses and the powers produced by the generators, the following optimization problem is solved for global optimality:

$$\begin{aligned} \text{minimize } & f(P^G, Q^G, V) \\ \text{subject to } & h_n(P^G, Q^G, V) = 0 \forall n = 1,..., Ne \\ & g_n(P^G, Q^G, V) \leq 0 \forall n = 1,..., Ni \end{aligned}, \quad (1)$$

where $h_n$ represents equality constraints, and $g_n$ represents inequality constraints .

**Optimal Power Flow-Constraints**

In the preferred embodiment, the equality constraints

$$h_n(P^G, Q^G, V) = 0 \forall n = 1,..., Ne$$

are represented as Power flows on the lines

$$\left. \begin{aligned} S_{ij} &= V_i\left(y_{ij}\left(V_i - V_j\right)\right)^* \\ S_{ji} &= V_j\left(y_{ij}\left(V_j - V_i\right)\right)^* \end{aligned} \right\} \forall (i, j) \in E$$

Power balances at the buses

$$\sum_{j \in N(i)} S_{ij} = S_i^G - S_i^D \; \forall \, i \in N$$

,

where $S_{ij} = P_{ij} + jQ_{ij}$ denotes the complex valued power transferred from bus $i$ to bus $j$, $S_{ji} = P_{ji} + jQ_{ji}$ denotes the complex valued power transferred from bus $j$ to bus $i$, $(V_i)^*$ denotes the complex conjugate of the complex valued variable, $S_i^G = P_i^G + jQ_i^G$ denotes the complex valued power produced by the generators and $S_i^D = P_i^D + jQ_i^D$ denotes the complex valued power demands. The variables representing power flow on the lines are used for convenience.

In the preferred embodiment, the inequality constraints

$$g_n(P^G, Q^G, V) = 0 \, \forall \, n = 1, ..., Ni$$

are represented as Limit on apparent power transferred on lines

$$\left. \begin{array}{l} \left| S_{ij} \right| \le S_{ij}^{\max} \\ \left| S_{ji} \right| \le S_{ij}^{\max} \end{array} \right\} \; \forall \, (i, j) \in E$$

Limit on active power transferred on lines

$$\left. \begin{array}{l} \mathrm{Re}\!\left( S_{ij} \right) \le P_{ij}^{\max} \\ \mathrm{Re}\!\left( S_{ji} \right) \le P_{ij}^{\max} \end{array} \right\} \; \forall \, (i, j) \in E$$

Limit on thermal loss on lines

$$\mathrm{Re}\!\left( S_{ij} + S_{ji} \right) \le L_{ij}^{\max} \; \forall \, (i, j) \in E$$

Limit of Power Generation

$$P_i^{G,\min} \le P_i^G \le P_i^{G,\max}, Q_i^{G,\min} \le Q_i^G \le Q_i^{G,\max} \, \forall \, i \in N$$

Limit on Voltage Magnitude

$$V_i^{\min} \le \sqrt{\mathrm{Re}(V_i)^2 + \mathrm{Im}(V_i)^2} \le V_i^{\max} \, \forall \, i \in N$$

**Conventional Dual Decomposition Based Optimization**

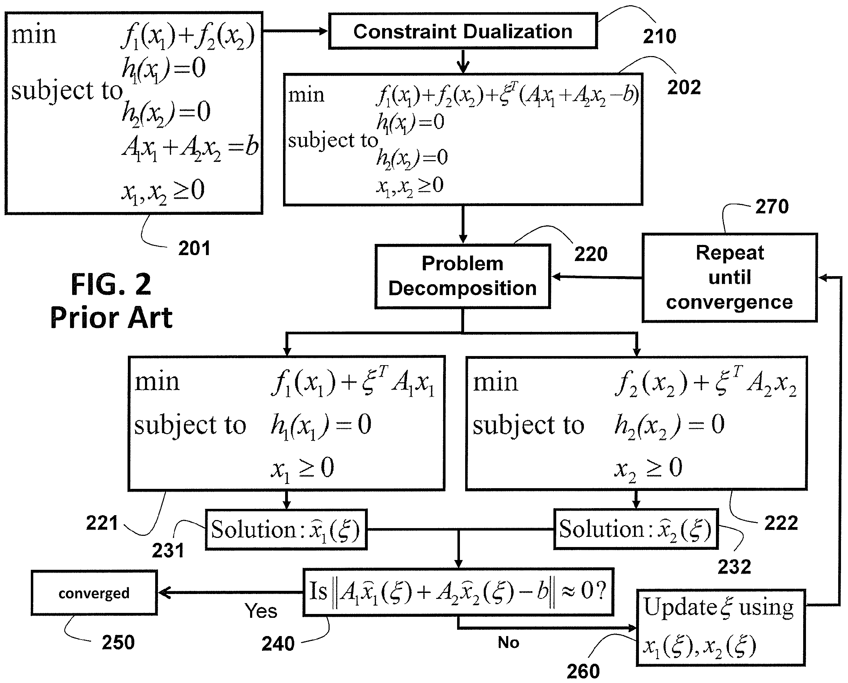

Figs. 2 shows a conventional method for solving an optimization problem 201 as defined by equation (2) below:
min subject to

$$f_1(x_1) + f_2(x_2)$$
$$h_1(x_1) = 0$$
$$h_2(x_2) = 0$$
$$A_1 x_1 + A_2 x_2 = b$$
$$x_1, x_2 \geq 0. \qquad (2)$$

Observe that the optimization problem can be decomposed to separate $x_1$, $x_2$, but for the equality constraint $A_1 x_1 + A_2 x_2 = b$. These coupling constraints can be removed by dualizing 210 the constraints in the objective function using multipliers $\xi$ as in equation (3) below: min subject to

$$f_1(x_1) + f_2(x_2) + \xi^T (A_1 x_1 + A_2 x_2 - b)$$
$$h_1(x_1) = 0$$
$$h_2(x_2) = 0$$
$$x_1, x_2 \geq 0. \qquad (3)$$

The optimization problem in equation (3) can be decomposed 220 to separate the variables $x_1$ 221 and $x_2$ 222 into a set of disjoint parametrized optimization problems, and corresponding constraints, and then solve the set optimization problems $x_1$, $x_2$ independently. In the examples used herein the set includes two disjoint problems $x_1$ and $x_2$. However, it is understood, that each problem can be further decomposed to a finer granularity as necessary.

Denote by $\widehat{x}_1(\xi)$ 231 and $\widehat{x}_2(\xi)$ 232 the optimal solution to each of the decomposed problems. The correct choice of multipliers $\xi$ is rarely known perfectly. As a consequence, the method iterates 270 until convergence 250 using a convergence test 240, and otherwise updating 260 the multipliers $\xi$ using only $\widehat{x}_1(\xi), \widehat{x}_2(\xi)$, until the constraints $A_1 \widehat{x}_1(\xi) + A_2 \widehat{x}_2(\xi) = b$ are approximately satisfied.

The updating can be performed using a line search procedure to find a local minimum. The line search finds a descent direction along which the objective function is reduced, and a step size. The descent direction can be computed by various methods, such as gradient descent, Newton's method and the quasi-Newton method.

Alternatively, a trust region can be used to optimize a subset of the region of a (quadratic) model function. If an adequate model of the objective function is found within the trust region, then the region is expanded, otherwise the region is contracted.

**Fast Dual Decomposition Based Optimization**

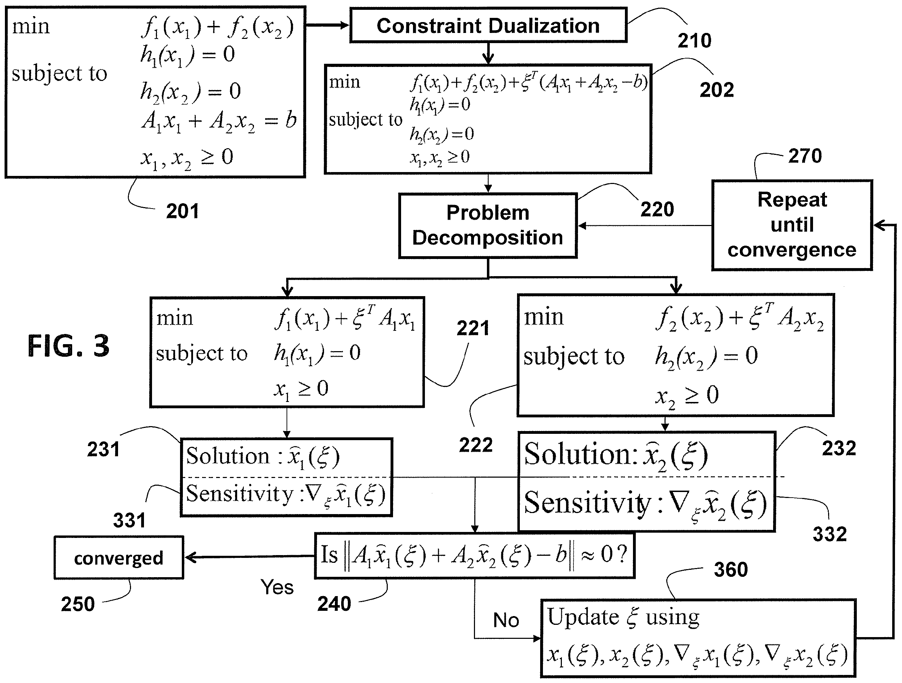

Fig. 3 shows an embodiment that accelerates the convergence of dual decomposition based methods. The initial steps are as described above for the conventional method to obtain a set of disjoint optimization problems.

The key difference is as follows. When solving each of the optimization, the invented method obtains the optimal solution $\widehat{x}_1(\xi), \widehat{x}_2(\xi)$ 231-232 as before, but also sensitivities of the solution to the choice of $\xi$, $\nabla_\xi \widehat{x}_1(\xi)$, $\nabla_\xi \widehat{x}_2(\xi)$ 331-332.

The sensitivity measures the variation in the solutions $\widehat{x}_1(\xi), \widehat{x}_2(\xi)$ to changes in the multiplying parameter $\xi$.

The updating is also different, in that now the updating 360 uses

$$x_1(\xi), x_2(\xi), \nabla_\xi x_1(\xi), \nabla_\xi x_2(\xi).$$

The sensitivities can be obtained by a solution of the following linear complementarity problem. In the subproblem for $x_1$ the sensitivities are obtained as:

$$\nabla_{x_1 x_1} L_1(\widehat{x}_1, \widehat{\lambda}_1, \widehat{\upsilon}_1; \xi) \nabla_\xi \widehat{x}_1(\xi) + \nabla_{x_1} h_1(\widehat{x}_1) \nabla_\xi \widehat{\lambda}_1 - \nabla_\xi \widehat{\upsilon}_1 = -A_1^T$$

$$h_1(\widehat{x}_1) + \nabla_{x_1} h_1(\widehat{x}_1)^T \nabla_\xi \widehat{x}_1(\xi) = 0$$

$$\widehat{x}_1(\xi) + \nabla_\xi \widehat{x}_1(\xi) \geq 0 \perp \widehat{\upsilon}_1(\xi) + \nabla_\xi \widehat{\upsilon}_1(\xi) \geq 0 \qquad (4)$$

where $\lambda$ and $\upsilon$ are respectively the multipliers corresponding to the inequality constraints and bounds, superscript $T$ is the transpose operator and $L_1(x_1, \lambda_1, \upsilon_1; \xi)$ is a Lagrangian function defined as

$$L_1(x_1, \lambda_1, \upsilon_1; \xi) = f_1(x_1) + \lambda_1^T h_1(x_1) - \upsilon_1^T x_1 + \xi^T A_1 x_1 .$$

The sensitivity for $x_2$ can be obtained in a similar manner. The system of equation (4) can be reduced to a solution of linear equations when the solution satisfies: $\widehat{x}_1(\xi) + \widehat{\upsilon}_1(\xi) > 0$, also called a strict complementarity.

Using the sensitivity to the multiplier $\xi$, a search direction $d\xi$ can be determined using the linearization of the dualized constraints as:

$$A_1 \nabla_\xi \widehat{x}_1(\xi) d\xi + A_2 \nabla_\xi \widehat{x}_2(\xi) d\xi = b - A_1 \widehat{x}_1(\xi) - A_2 \widehat{x}_2(\xi) . \qquad (5)$$

This constitutes taking a Newton-like direction for the dualized constraints, and this is precisely why the convergence is accelerated. The Newton step is known to converge locally superlinearly when in the neighborhood of the solution. The conventional dual decomposition method does not have this rapid local convergence property.

Further, this approach allows one to define a merit function

$$\phi(\xi) = \left\| A_1 \widehat{x}_1(\xi) + A_2 \widehat{x}_2(\xi) - b \right\|_2^2 ,$$

to measure the progress of the method towards solving the optimization problem 201 of equation (2), where $\| \|_2$ represent the Euclidean vector norm.

The merit function influences the choice of the next multipliers through the sufficient decrease requirement where the step length $\alpha \in (0,1]$ is selected to satisfy:

$$\phi(\xi + \alpha d\xi) \leq \phi(\xi) + \beta \alpha \phi'(\xi; d\xi) , \qquad (6)$$

where $\beta > 0$ is usually a small constant, and $\phi'(\xi; d\xi)$ is the directional derivative of the merit function at the point $\xi$ along the direction $d\xi$. The directional derivative is mathematically defined by the following limit:

$$\phi'(\xi; d\xi) = \lim_{t \to 0} \frac{\phi(\xi + t d\xi) - \phi(\xi)}{t} .$$

**Fast Dual Decomposition Based Optimization for Optimal Power Flow**

Consider a partition of the edges in the network into Ng smaller set of edges $(E^1, E^2, ..., E^{Ng})$ where the sets are disjoint and their union is the set of all edges $E$. The set of buses in edge set $E^k$ is denoted by $N^k$. Utilizing this set of smaller networks $G(N^k, E^k)$ the optimal power flow problem can be equivalently formulated as described in the following. Further, denote by $K_i$ the set of networks to which the node $i$ belongs.

The objective function for each sub-network can be posed as:

$$f(P^{G,k}, Q^{G,k}, V^k) = \sum_{i \in N^k} (c_{2i}^k (P_i^{G,k})^2 + c_{1i}^k P_i^{G,k} + c_{0i}^k),$$

where $P_i^{G,k}$, $Q_i^{G,k}$, $V_i^k$ denotes the real power, reactive power and voltage at the node $i$ in node set $N^k$. The constants are selected as:

$$c_{2i}^k = \frac{c_{2i}}{n_i}, c_{1i}^k = \frac{c_{1i}}{n_i}, c_{0i}^k = \frac{c_{0i}}{n_i},$$

where $n_i$ is the number of sub-networks $k$ in which the node $i$ occurs.

The constraints model the operation of the electrical network by the equality constraints:

$$h_n^k(P^{G,k}, Q^{G,k}, V^k) = 0 \forall n = 1, ..., Ne^k, k = 1, ..., Ng$$

where $Ne^k$ indicates the number of equality constraints in the sub-network $k$.

We model the limits on power generated by generators, limits on voltage magnitudes at the buses, constraints on the power transferred on the lines and thermal losses ensuring feasible operation as inequality constraints

$$g_n^k(P^{G,k}, Q^{G,k}, V^k) \leq 0 \forall n = 1, ..., Ni^k, k = 1, ..., Ng,$$

where $Ni^k$ indicates the number of inequality constraints in the sub-network $k$.

Constraints are also imposed on power generation and voltage magnitudes at the buses.

To determine the voltages at the buses and the powers produced by the generators, the following optimization problem is solved to global optimality: minimize subject to

$$\sum_{k=1}^{Ng} f^k(P^{G,k}, Q^{G,k}, V^k)$$

$$h_n^k(P^{G,k}, Q^{G,k}, V^k) = 0 \forall n = 1, ..., Ne^k, k = 1, ..., Ng$$

$$g_n^k(P^{G,k}, Q^{G,k}, V^k) \leq 0 \forall n = 1, ..., Ni^k, k = 1, ..., Ng$$

$$\left. \begin{array}{l} P_i^{G,k} = P_i^{G,l} \\[6pt] Q_i^{G,k} = Q_i^{G,l} \\[6pt] \mathrm{Re}(V_i^k) = \mathrm{Re}(V_i^l) \\[6pt] \mathrm{Im}(V_i^k) = \mathrm{Im}(V_i^l) \end{array} \right\} k = \min(K_i), l \in N_i, k \neq l, i \in N$$

$$, \qquad (7)$$

where the last set of constraints equates the generator power and voltages for nodes that are shared by different sub-networks $k$. The above formulation is identically equivalent to the optimal power flow formulation.

For ease of exposition, the notation $x^k = (P^{G,k}, Q^{G,k}, V^k)$ is used in the following and

$$x_i^k = (P_i^{G,k}, Q_i^{G,k}, V_i^{G,k})$$ for some $i \in N^k$. With this notation, the problem in equation (2) can be reformulated as: minimize subject to

$$\sum_{k=1}^{Ng} f^k(x^k)$$

$$h_n^k(x^k) = 0 \forall n = 1,...,Ne^k, k = 1,...,Ng$$

$$g_n^k(x^k) \le 0 \forall n = 1,...,Ni^k, k = 1,...,Ng$$

$$x_i^k = x_i^l; k = \min(K_i), l \in N_i, k \ne l, i \in N \,.$$

The above problem equation is decomposed into smaller optimization problems by removing the set of the equality constraints in the optimization and replacing it in the objective function as: minimize subject to

$$\sum_{k=1}^{Ng} f^k(x^k) + \sum_{i \in N} \left( \sum_{k=\min(Ni),k\ne l} (\xi_i^{kl})^T \left( x_i^k - x_i^l \right) \right)$$

$$h_n^k(x^k) = 0 \forall n = 1,...,Ne^k, k = 1,...,Ng$$

$$g_n^k(x^k) \le 0 \forall n = 1,...,Ni^k, k = 1,...,Ng$$

where, $\xi_i^{kl}$, $k = \min(K_i)$, $k \ne l$ are the multipliers for equality constraints that equate the copies of the power generation and voltage variables for nodes that are shared across sub-networks. This procedure is called the dualization of the coupling constraints. This renders the optimization problem decoupled by sub-networks.

The optimization for each sub-network is: minimize subject to

$$\sum_{k=1}^{Ng} \widetilde{f}^k(x^k; \xi)$$

$$h_n^k(x^k) = 0 \forall n = 1,...,Ne^k$$

$$g_n^k(x^k) \le 0 \forall n = 1,...,Ni^k$$

$$, \quad (8)$$

where the objective function for $k = \min(K_i)$ is:

$$\widetilde{f}^k(x^k; \xi) = f^k(x^k) + \sum_{i \in N} \sum_{l \ne \min(K_i)} (\xi_i^{kl})^T x_i^k$$

and for $l \ne \min(K_i)$ is:

$$\widetilde{f}^l(x^l; \xi) = f^l(x^l) - \sum_{i \in N} (\xi_i^{kl})^T x_i^l$$

The decomposition step solves each of the optimization problems for the sub-networks $k = 1, ...,Ng$ for a given choice of the multipliers $\xi$. Denote by $\widehat{x}^k(\xi)$ the optimal solution to the problem corresponding to the sub-network $k$.

Further, denote by $\nabla_\xi \widehat{x}^k(\xi)$ the sensitivity of the optimal solution to the sub-network $k$ for the given choice of multipliers. The sensitivity can be obtained as follows. The first order optimality conditions for the sub-network $k$ is:

$$\nabla_{x^k} L^k(x^k, \lambda^{h,k}, \lambda^{g,k}; \xi) = 0$$

$$h_n^k(x^k) = 0 \forall n = 1,...,Ne^k$$

$$g_n^k(x^k) \le 0 \perp \lambda_n^{g,k} \ge 0 \forall n = 1,...,Ni^k, \qquad (9)$$

where the Lagrangian function is defined as:

$$L^k(x^k, \lambda^{h,k}, \lambda^{g,k}; \xi) = \widetilde{f}^k(x^k; \xi) + \sum_{n=1}^{Ne^k} \lambda_n^{h,k} h_n^k(x^k) + \sum_{n=1}^{Ni^k} \lambda_n^{g,k} g_n^k(x^k)$$

where the notation $\lambda_n^{h,k}$ represent the multipliers for the equality constraints $h_n^k$; $\lambda_n^{g,k}$ represent the multipliers for the inequality constraints $g_n^k$.

A solution $\widehat{x}^k(\xi)$ to the optimal solution to the problem corresponding to the sub-network $k$ will necessarily satisfy the first order optimality conditions listed above. The sensitivity of the optimal solution to the multipliers $\xi$ can be obtained by solving the following linear complementarity problem obtained by differentiating the first order conditions with respect to variables $x^k$ and multipliers ($\lambda^{h,k}$, $\lambda^{g,k}$) :

$$\nabla_{x^k x^k} L^k(\widehat{x}^k, \widehat{\lambda}^{h,k}, \widehat{\lambda}^{g,k}; \xi) \nabla_\xi \widehat{x}^k + \sum_{n=1}^{Ne^k} \nabla_{x^k} h_n^k(\widehat{x}^k) \nabla_\xi \widehat{\lambda}_n^{h,k}$$

$$+ \sum_{n=1}^{Ni^k} \nabla_{x^k} g_n^k(\widehat{x}^k) \nabla_\xi \widehat{\lambda}_n^{g,k} = -\nabla_{x^k \xi} \widetilde{f}^k(\widehat{x}^k; \xi)$$

$$\nabla_{x^k} h_n^k(\widehat{x}^k)^T \nabla_\xi \widehat{x}^k = 0 \forall n = 1,...,Ne^k$$

$$g_n^k(\widehat{x}^k) + \nabla_{x^k} g_n^k(\widehat{x}^k)^T \nabla_\xi \widehat{x}^k \le 0 \perp \widehat{\lambda}_n^{g,k} + \nabla_\xi \widehat{\lambda}_n^{g,k} \ge 0 \forall n = 1,...,Ni^k \qquad . \quad (10)$$

The sensitivity computations are used to compute a search direction $d\xi$ for the multipliers by solving the following equations:

$$\widehat{x}_i^k(\xi) + \nabla_\xi \widehat{x}_i^k(\xi)^T d\xi = \widehat{x}_i^l(\xi) + \nabla_\xi \widehat{x}_i^l(\xi)^T d\xi; k = \min(K_i), l \in N_i, k \ne l, i \in N \qquad . \quad (11)$$

Using this search direction a new set of multipliers $\xi^+ = \xi + \alpha d\xi$ where $0 < \alpha \le 1$ is selected as described below. Define the function $\phi(\xi)$ termed the merit function as

$$\phi(\xi) := \left\| \begin{bmatrix} \widehat{x}_i^k(\xi) - \widehat{x}_i^l(\xi); k = \min(K_i), l \in N_i, k \neq l, i = 1 \\ .... \\ \widehat{x}_i^k(\xi) - \widehat{x}_i^l(\xi); k = \min(K_i), l \in N_i, k \neq l, i = |N| \end{bmatrix} \right\|_2^2 . \qquad (12)$$

The merit function is the Euclidean norm of the residual of the dualized constraints that couple the different sub-networks. This measures the degree to which the original problem in equation (1) has been solved. When $\phi(\xi) \approx 0$, the method terminates with $\widehat{x}^k(\xi)$ as the solution for equation (1).

The step for multipliers is selected so that the merit function is decreased as prescribed the following condition:

$$\phi(\xi + \alpha d\xi) \leq \phi(\xi) + \beta\alpha\phi'(\xi; d\xi) \qquad (13)$$

where $\phi'(\xi; d\xi)$ is the directional derivative of the merit function at the point $\xi$ along the direction $d\xi$ and is mathematically defined by the following limit:

$$\phi'(\xi; d\xi) = \lim_{t \to 0} \frac{\phi(\xi + td\xi) - \phi(\xi)}{t} .$$

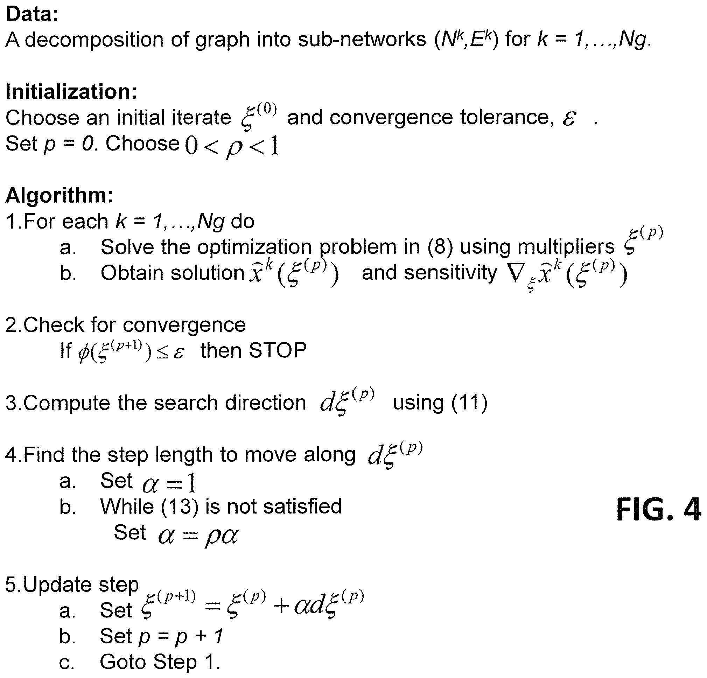

Using the new multiplier $\xi^+$, the decomposed optimization in equation (3), sensitivity computation (4) and multiplier step computation (5) are repeated until the merit function $\phi(\xi)$ is close to zero.
A description of the methodic steps is provided in Fig 4.

**Fast Dual Decomposition with Smoothing for Optimal Power Flow**

The fast decomposition approach is based on the computation of sensitivities with respect to the multipliers $\xi$ for the dualized constraints. However, the sensitivity may not exist under some conditions. For instance in optimization problem (3) when $\widehat{x}_1(\xi) + \widehat{\upsilon}_1(\xi) \neq 0$ does not hold. In such instances only a directional derivative can be obtained.

To rectify this situation consider the modification of the problem solved for each of the sub-networks $k$ as follows. Consider modifying the stationary conditions (9) as,

$$\nabla_{x^k} L^k(x^k, \lambda^{h,k}, \lambda^{g,k}; \xi) = 0$$

$$h_n^k(x^k) = 0 \forall n = 1, ..., Ne^k$$

$$\psi(-g_n^k(x^k), \lambda_n^{g,k}; \tau) = 0 \forall n = 1, ..., Ni^k , \qquad (14)$$

where the function $\psi(a, b; \tau)$ is a smoothing function for the complementarity constraints satisfying the property that:

  (i) $\psi(a,b;0) = 0 \Leftrightarrow a \geq 0 \perp b \geq 0$
  (ii) $\psi(a, b; \tau)$ is continuously differentiable for all $\tau > 0$.

The second property ensures that the for all $\tau > 0$ the optimization problems are smooth and continuously differentiable. While the first property ensures that one can recover a solution to equation (9) by solving a sequence smoothed problem when $\tau \to 0$. There exist several choices for such a function:

$$1. \quad \psi(a,b;\tau) = a + b - \sqrt{a^2 + b^2 + \tau^2}$$

$$2. \quad \psi(a,b;\tau) = a + b - \sqrt{(a-b)^2 + \tau^2}$$

$$3. \quad \psi(a,b;\tau) = ab - \tau, a, b \geq 0$$

In the third choice the nonnegativity of *a* and *b* have to enforced explicitly. This is precisely what interior point methods do.

Using this modification the method where solution to original problem (1) is obtained can be restated by first solving for fixed $\tau > 0$ the problem in equation (14) to a certain tolerance and then decreasing $\tau \to 0$ to obtain a solution to equation (1) in the limit.

Denote by $\left( \widehat{x}^k, \widehat{\lambda}^{h,k}, \widehat{\lambda}^{g,k} \right) (\xi; \tau)$ the solutions to equation (14). In the case of smoothing, the sensitivity of solutions to the multipliers $\xi$ can be computed as the solution of the following linear equations:

$$\nabla_{x^k x^k} L^k(\widehat{x}^k, \widehat{\lambda}^{h,k}, \widehat{\lambda}^{g,k}; \xi) \nabla_{\xi} \widehat{x}^k + \sum_{n=1}^{Ne^k} \nabla_{x^k} h_n^k(\widehat{x}^k) \nabla_{\xi} \widehat{\lambda}_n^{h,k}$$

$$+ \sum_{n=1}^{Ni^k} \nabla_{x^k} g_n^k(\widehat{x}^k) \nabla_{\xi} \widehat{\lambda}_n^{g,k} = -\nabla_{x^k \xi} \widetilde{f}^k(\widehat{x}^k; \xi)$$

$$\nabla_{x^k} h_n^k(\widehat{x}^k)^T \nabla_{\xi} \widehat{x}^k = 0 \forall n = 1, ..., Ne^k$$

$$\psi(-g_n^k(\widehat{x}^k), \widehat{\lambda}_n^{g,k}; \tau) + \nabla_{x^k} \psi(-g_n^k(\widehat{x}^k), \widehat{\lambda}_n^{g,k}; \tau)^T \nabla_{\xi} \widehat{x}^k +$$

$$\nabla_{\lambda^{g,k}} \psi(-g_n^k(\widehat{x}^k), \widehat{\lambda}_n^{g,k}; \tau) \nabla_{\xi} \widehat{\lambda}_n^{g,k} = 0 \forall n = 1, ..., Ni^k \qquad ,(15)$$

Observe these are linear equations as opposed to linear complementarity equations as in equation (10).

The sensitivity computations are used to compute a search direction $d\xi$ for the multipliers by solving the following equations:

$$\widehat{x}_i^k(\xi, \tau) + \nabla_{\xi} \widehat{x}_i^k(\xi, \tau)^T d\xi = \widehat{x}_i^l(\xi, \tau) + \nabla_{\xi} \widehat{x}_i^l(\xi, \tau)^T d\xi, k =$$

$$\min(K_i), l \in N_i, k \neq l, i \in N \qquad (16)$$

Using this search direction a new set of multipliers $\xi^+ = \xi + \alpha d\xi$ where $0 < \alpha \leq 1$ is selected as described below. Define the function $\phi(\xi)$ termed the merit function as

$$\phi(\xi;\tau) := \left\| \begin{bmatrix} \widehat{x}_i^k(\xi;\tau) - \widehat{x}_i^l(\xi;\tau); k = \min(K_i), l \in N_i, k \neq l, i = 1 \\ .... \\ \widehat{x}_i^k(\xi;\tau) - \widehat{x}_i^l(\xi;\tau); k = \min(K_i), l \in N_i, k \neq l, i = |N| \end{bmatrix} \right\|_2^2 . \qquad (17)$$

The merit function is the Euclidean norm of the residual of the dualized constraints that couple the different sub-networks. This measures the degree to which the original problem (1) has been solved. When $\phi(\xi;\tau) \approx \tau$, the iterations for particular smoothing parameter value can be terminated and decrease the parameter. When $\phi(\xi;0) \approx 0$, the method terminates with $\widehat{x}^k(\xi)$ as the solution for equation (1).

The step for multipliers is selected so that the merit function decreases as prescribed in the following condition:

$$\phi(\xi + \alpha d\xi;\tau) \leq \phi(\xi;\tau) + \beta\alpha \nabla_\xi \phi(\xi;\tau)^T d\xi , \qquad (18)$$

where $\nabla_\xi \phi(\xi;\tau)$ is the gradient of the merit function at the given point $\xi$. A full derivative can be defined, instead of a directional derivative as in equation (13). If the smoothing parameter is selected to be decreased superlinearly, then fast local convergence in the neighborhood of the solution to equation (1) can be obtained.

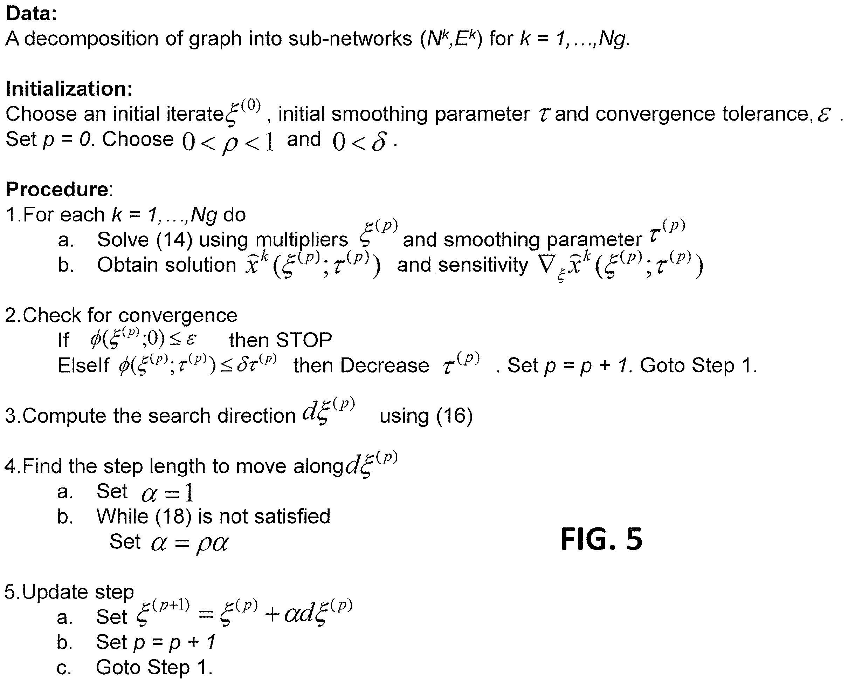

Figs. 4 and 5 show the pseudo code for the above embodiments. The steps of the method can be performed in one or more processors connected to memory and input/output interfaces as known in the art.

**Claims**

1. A method for optimizing a power flow in an electric power network by solving an optimization problem (201), the electric power network including buses (10), the buses being connected to loads (12) and generators (14) and being interconnected by transmission lines (20), the method comprising optimizing the power flow in the electric power network by performing the steps of:

   decomposing (220) the optimization problem into a set of disjoint parameterized optimization problems, wherein the disjoint parameterized optimization problems in the set are independent of each other, and wherein the decomposition is based on constraints having corresponding multipliers, which are parameters of the disjoint parameterized optimization problems, and wherein constraints are dualized coupled constraints;
   solving (231, 232) each disjoint parameterized optimization problem independently to obtain a corresponding solution, and a sensitivity of each solution to changes in the parameter; and
   updating (260) the parameters using the corresponding solutions and the sensitivities, and repeating (270) the decomposing (220), the solving (231, 232), and the updating (260) until convergence, wherein the steps are performed in a processor,
   wherein an output of the method includes complex valued voltages at the buses (10) and active and reactive power levels of the generators (14).

2. The method of claim 1, wherein variables of the constraints are continuously controllable.

3. The method of claim 1, further comprising:

   representing the electric power network by a graph of nodes and edges, wherein the nodes represent generators and loads connected to buses, and the edges $(i, j)$ between nodes represent transmission lines.

4. The method of claim 3, wherein input to the method includes:

   the graph,
   an admittance of the transmission lines

$$y_{ij} = g_{ij} + \mathrm{j}b_{ij} \, ,$$

where $g$ represents conductance of the transmission line, $b$ represents susceptance of the transmission line, and $\mathrm{j} = \sqrt{-1}$,

constraints on active power $P_i^{G,\min}$, $P_i^{G,\max}$ that can be produced by the generators, and the reactive power $Q_i^{G,\min}$, $Q_i^{G,\max}$ that can be produced by the generators.

constraints $S_{ij}^{\max}$, $P_{ij}^{\max}$ on apparent and active power transferred on the transmission lines,

limits $V_i^{\min}$, $V_i^{\max}$ on voltage magnitudes at the buses, and

constraints $L_{ij}^{\max}$ on thermal losses on the transmision lines; and outputs of the method include:

complex valued voltages $V_i$ at the buses, and active and reactive power levels $P_i^G$, $Q_i^G$ of the generators.

5. The method of claim 4, wherein the optimization uses a decision function $f(P^G, Q^G, V)$ that depends on active power generation variables $P^G = (P_1^G, ..., P_{|N|}^G)$, reactive power generation variables $Q^G = (Q_1^G, ..., Q_{|N|}^G)$, and complex valued voltages $V = (V_1, ... , V_{|N|})$ at the buses.

6. The method of claim 5, wherein the decision function $f$ is quadratic and strictly increasing:

$$f(P^G, Q^G, V) = \sum_{i \in N} (c_{2i}(P_i^G)^2 + c_{1i}P_i^G + c_{0i}) \, ,$$

where $c$ indicates constants, with $c_{2i}, c_{1i} \geq 0 \, \forall i \in N$.

7. The method of claim 1, wherein limits of feasible operation of the network, equality constraints, inequality constraints, and bounds on decision variables are used.

8. The method of claim 1, wherein inequality constraints are represented as a smoothed equality constraints using a smoothing parameter, and the smoothing parameter is reduced to zero during the repeating (270) of the updating (260).

9. The method of claim 1, wherein the update of the parameters are performed using a line search procedure.

10. The method of claim 1, wherein the update of the parameters are performed using a trust region.

11. The method of claim 1, wherein the updating (270) alternates between updating with and without using the sensitivities.

12. The method of claim 1, wherein the sensitivities measure variation in the solutions to changes in the multipliers.

**Patentansprüche**

1. Verfahren zum Optimieren eines Energieflusses in einem elektrischen Energienetzwerk durch Lösen eines Optimierungsproblems (201), wobei das elektrische Energienetzwerk Busse (10) umfasst, wobei die Busse mit Verbrauchern (12) und Generatoren (14) verbunden sind und durch Übertragungsleitungen (20) miteinander verbunden sind, wobei das Verfahren Optimieren des Energieflusses in dem elektrischen Energienetzwerk durch Durchführen der folgenden Schritte umfasst:

Zerlegen (220) des Optimierungsproblems in eine Menge von disjunkten parametrierten Optimierungsproblemen, wobei die disjunkten parametrierten Optimierungsprobleme in der Menge voneinander unabhängig sind, und wobei die Zerlegung auf Nebenbedingungen basiert, die entsprechende Multiplikatoren aufweisen, welche Parameter des disjunkten parametrierten Optimierungsproblems sind, und wobei Nebenbedingungen dualisierte gekoppelte Nebenbedingungen sind;

unabhängiges Lösen (231, 232) jedes disjunkten parametrierten Optimierungsproblems um eine entsprechende Lösung zu erhalten, und einer Empfindlichkeit von jeder Lösung gegenüber Veränderungen des Parameters; und Aktualisieren (260) der Parameter unter Verwendung der entsprechenden Lösungen und der Empfindlichkeiten, und Wiederholen (270) des Zerlegens (220), des Lösens (231, 232) und des Aktualisierens (260) bis zur Konvergenz, wobei die Schritte in einem Prozessor durchgeführt werden;

wobei eine Ausgabe des Verfahrens komplexwertige Spannungen an den Bussen (10) und Wirkleistungs- und Blindleistungsniveaus der Generatoren (14) umfasst.

2. Verfahren nach Anspruch 1, wobei Variablen der Nebenbedingungen kontinuierlich steuerbar sind.

3. Verfahren nach Anspruch 1, ferner umfassend:

Repräsentieren des elektrischen Energienetzwerks durch einen Graphen aus Knoten und Kanten, wobei die Knoten mit Bussen verbundene Generatoren und Verbraucher repräsentieren, und die Kanten (*i, j*) zwischen Knoten Übertragungsleitungen repräsentieren.

4. Verfahren nach Anspruch 3, wobei Eingaben in das Verfahren umfassen:

den Graphen,
eine Admittanz der Übertragungsleitungen

$$y_{ij} = g_{ij} + j b_{ij} ,$$

wobei *g* Leitfähigkeit der Übertragungsleitung repräsentiert, *b* eine Suszeptanz der Übertragungsleitung repräsentiert, und $j = \sqrt{-1}$,

Nebenbedingungen für die Wirkleistung $P_i^{G,\min}$, $P_i^{G,\max}$, die durch die Generatoren erzeugt werden kann, und

die Blindleistung $Q_i^{G,\min}$, $Q_i^{G,\max}$, die durch die Generatoren erzeugt werden kann,

Nebenbedingungen $S_{ij}^{\max}$, $P_{ij}^{\max}$ für auf den Übergen übertragene Scheinleistung und Wirkleistung;

Grenzen $V_i^{\min}$, $V_i^{\max}$ für Spannungsgrößen an den Bussen, und Nebenbedingungen $L_{ij}^{\max}$ für thermische Verluste auf den Übertragungsleitungen; und
Ausgaben des Verfahrens umfassen:

komplexwertige Spannungen $V_i$ an den Bussen, und Wirk- und Blindleistungsniveaus $P_i^G$, $Q_i^G$ der Generatoren.

5. Verfahren nach Anspruch 4, wobei die Optimierung eine Entscheidungsfunktion $f(P^G, Q^G, V)$ verwendet, die von

Wirkleistungserzeugungsvariablen $P^G = (P_1^G, ..., P_{|N|}^G)$, Blindleistungserzeugungsvariablen

$Q^G = (Q_1^G, ..., Q_{|N|}^G)$, und komplexwertigen Spannungen $V = (V_1, ..., V_{|N|})$ an den Bussen abhängig ist.

**6.** Verfahren nach Anspruch 5, wobei die Entscheidungsfunktion *f* quadratisch und streng steigend ist:

$$f(P^G, Q^G, V) = \sum_{i \in N} \left( c_{2i} (P_i^G)^2 + c_{1i} P_i^G + c_{0i} \right) \, ,$$

wobei c Konstanten angibt, mit $c_{2i}, c_{1i} \geq 0 \forall i \in N$.

**7.** Verfahren nach Anspruch 1, wobei Grenzen des realisierbaren Betriebs des Netzwerks, Gleichheitsnebenbedingungen, Ungleichheitsnebenbedingungen und Grenzen für Entscheidungsvariablen eingesetzt werden.

**8.** Verfahren nach Anspruch 1, wobei Ungleichheitsnebenbedingungen als geglättete Gleichheitsnebenbedingungen unter Verwendung eines Glättungsparameters repräsentiert sind, und der Glättungsparameter während des Wiederholens (270) des Aktualisierens (260) auf Null reduziert wird.

**9.** Verfahren nach Anspruch 1, wobei die Aktualisierung der Parameter unter Verwendung eines Liniensuchvorgangs durchgeführt wird.

**10.** Verfahren nach Anspruch 1, wobei die Aktualisierung der Parameter unter Verwendung eines Vertrauensbereichs durchgeführt wird.

**11.** Verfahren nach Anspruch 1, wobei das Aktualisieren (270) zwischen Aktualisieren mit und ohne Verwendung der Empfindlichkeiten wechselt.

**12.** Verfahren nach Anspruch 1, wobei die Empfindlichkeiten Variation der Lösungen gegenüber Veränderungen der Multiplikatoren messen.

**Revendications**

**1.** Procédé d'optimisation d'un flux d'énergie dans un réseau d'énergie électrique, par la résolution d'un problème d'optimisation (201), le réseau d'énergie électrique incluant des bus (10), les bus étant connectés à des charges (12) et à des générateurs (14), et étant interconnectés par des lignes de transmission (20), le procédé comprenant l'étape consistant à optimiser le flux d'énergie dans le réseau d'énergie électrique en mettant en oeuvre les étapes ci-dessous consistant à :

décomposer (220) le problème d'optimisation en un ensemble de problèmes d'optimisation paramétrés disjoints, dans lequel les problèmes d'optimisation paramétrés disjoints dans l'ensemble sont indépendants les uns des autres, et dans lequel la décomposition est basée sur des contraintes présentant des multiplicateurs correspondants, lesquels correspondent à des paramètres des problèmes d'optimisation paramétrés disjoints, et dans lequel les contraintes sont des contraintes couplées dualisées ;
résoudre (231, 232) chaque problème d'optimisation paramétré disjoint, indépendamment, en vue d'obtenir une solution correspondante, et une sensibilité de chaque solution à des modifications du paramètre ; et
mettre à jour (260) les paramètres en utilisant les solutions correspondantes et les sensibilités, et répéter (270) l'étape de décomposition (220), l'étape de résolution (231, 232) et l'étape de mise à jour (260) jusqu'à obtenir une convergence, dans lequel les étapes sont mises en oeuvre dans un processeur ;
dans lequel une sortie du procédé inclut des tensions à valeurs complexes au niveau des bus (10) et des niveaux de puissance active et réactive des générateurs (14).

**2.** Procédé selon la revendication 1, dans lequel des variables des contraintes peuvent être commandées en continu.

**3.** Procédé selon la revendication 1, comprenant en outre l'étape ci-dessous consistant à :

représenter le réseau d'énergie électrique par un graphe de noeuds et de bords, dans lequel les noeuds représentent des générateurs et des charges connectés à des bus, et les bords $(i, j)$ entre les noeuds représentent des lignes de transmission.

**4.** Procédé selon la revendication 3, dans lequel l'entrée dans le procédé inclut :

le graphe,
une admittance des lignes de transmission

$$y_{ij} = g_{ij} + \mathrm{j}b_{ij} \, ,$$

où « g » représente la conductance de la ligne de transmission, « b » représente la susceptance de la ligne de transmission et $\mathrm{j} = \sqrt{-1}$ ,

des contraintes sur la puissance active $P_i^{G,\min}$ , $P_i^{G,\max}$ qui peut être produite par les générateurs, et sur la puissance réactive, $Q_i^{G,\min}$ , $Q_i^{G,\max}$ qui peut être produite par les générateurs ;

des contraintes $S_{ij}^{\max}$ , $P_{ij}^{\max}$ sur la puissance apparente et la puissance active transférées sur les lignes de transmission ;

des limites $V_i^{\min}$ , $V_i^{\max}$ sur des amplitudes de tension au niveau des bus ; et

des contraintes $L_{ij}^{\max}$ sur des pertes thermiques sur les lignes de transmission ; et les sorties du procédé incluent :

des tensions à valeurs complexes $V_i$ au niveau des bus, et des niveaux de puissance active et réactive $P_i^G$ , $Q_i^G$ des générateurs.

5.  Procédé selon la revendication 4, dans lequel l'optimisation utilise une fonction de décision f($P^G$, $Q^G$, $V$) qui dépend de variables de production de puissance active $P^G = (P_1^G,...,P_{|N|}^G)$ , de variables de production de puissance réactive $Q^G = (Q_1^G,...,Q_{|N|}^G)$ et de tensions à valeurs complexes $V = (V_1,..., V_{|N|})$ au niveau des bus.

6.  Procédé selon la revendication 5, dans lequel la fonction de décision « f » est quadratique et strictement croissante :

$$f(P^G,Q^G,V) = \sum_{i \in N}(c_{2i}(P_i^G)^2 + c_{1i}P_i^G + c_{0i}) \, ,$$

où « c » indique des constantes, avec $c_{2i}$, $c_{1i} \geq 0 \ \forall_i \in N$.

7.  Procédé selon la revendication 1, dans lequel sont utilisées des limites de fonctionnement réalisable du réseau, des contraintes d'égalité, des contraintes d'inégalité et des limites sur des variables de décision.

8.  Procédé selon la revendication 1, dans lequel les contraintes d'inégalité sont représentées sous la forme de contraintes d'égalité lissées en utilisant un paramètre de lissage, et le paramètre de lissage est ramené à zéro au cours de la répétition (270) de l'étape de mise à jour (260).

9.  Procédé selon la revendication 1, dans lequel la mise à jour des paramètres est mise en oeuvre en faisant appel à une procédure de recherche de lignes.

10. Procédé selon la revendication 1, dans lequel la mise à jour des paramètres est mise en oeuvre en faisant appel à une zone de confiance.

11. Procédé selon la revendication 1, dans lequel l'étape de mise à jour (270) alterne entre une mise à jour avec et sans utilisation des sensibilités.

12. Procédé selon la revendication 1, dans lequel les sensibilités mesurent une variation dans les solutions aux modifications apportées aux multiplicateurs.

FIG. 1

$$\text{min} \quad f_1(x_1)+f_2(x_2)$$
$$\text{subject to} \quad \begin{array}{l} h_1(x_1)=0 \\ h_2(x_2)=0 \\ A_1x_1+A_2x_2=b \\ x_1,x_2 \geq 0 \end{array}$$

**201**

## FIG. 2
## Prior Art

**Constraint Dualization** — **210**

$$\text{min} \quad f_1(x_1)+f_2(x_2)+\xi^T(A_1x_1+A_2x_2-b)$$
$$\text{subject to} \quad \begin{array}{l} h_1(x_1)=0 \\ h_2(x_2)=0 \\ x_1,x_2 \geq 0 \end{array}$$

**202**

**Problem Decomposition** — **220**

**Repeat until convergence** — **270**

$$\text{min} \quad f_1(x_1)+\xi^T A_1 x_1$$
$$\text{subject to} \quad h_1(x_1)=0$$
$$x_1 \geq 0$$

**221**

$$\text{min} \quad f_2(x_2)+\xi^T A_2 x_2$$
$$\text{subject to} \quad h_2(x_2)=0$$
$$x_2 \geq 0$$

**222**

Solution: $\hat{x}_1(\xi)$  **231**

Solution: $\hat{x}_2(\xi)$  **232**

Is $\left\| A_1\hat{x}_1(\xi)+A_2\hat{x}_2(\xi)-b \right\| \approx 0?$

Yes **240**

**converged** — **250**

No

Update $\xi$ using $x_1(\xi), x_2(\xi)$ — **260**

**FIG. 3**

$$\text{min} \quad f_1(x_1) + f_2(x_2)$$
$$\text{subject to} \quad h_1(x_1) = 0$$
$$h_2(x_2) = 0$$
$$A_1 x_1 + A_2 x_2 = b$$
$$x_1, x_2 \geq 0$$

**201**

**Constraint Dualization** **210**

$$\text{min} \quad f_1(x_1) + f_2(x_2) + \xi^T (A_1 x_1 + A_2 x_2 - b)$$
$$\text{subject to} \quad h_1(x_1) = 0$$
$$h_2(x_2) = 0$$
$$x_1, x_2 \geq 0$$

**202**

**Problem Decomposition** **220**

**Repeat until convergence** **270**

$$\text{min} \quad f_1(x_1) + \xi^T A_1 x_1$$
$$\text{subject to} \quad h_1(x_1) = 0$$
$$x_1 \geq 0$$

**221**

$$\text{min} \quad f_2(x_2) + \xi^T A_2 x_2$$
$$\text{subject to} \quad h_2(x_2) = 0$$
$$x_2 \geq 0$$

**222**

**231**

Solution : $\hat{x}_1(\xi)$

Sensitivity : $\nabla_\xi \hat{x}_1(\xi)$

**331**

**232**

Solution: $\hat{x}_2(\xi)$

Sensitivity : $\nabla_\xi \hat{x}_2(\xi)$

**332**

**converged**

**250**

Is $\left\| A_1 \hat{x}_1(\xi) + A_2 \hat{x}_2(\xi) - b \right\| \approx 0$ ?

Yes

**240**

No

Update $\xi$ using

$x_1(\xi), x_2(\xi), \nabla_\xi x_1(\xi), \nabla_\xi x_2(\xi)$

**360**

**Data:**

A decomposition of graph into sub-networks $(N^k, E^k)$ for $k = 1, \ldots, Ng$.

**Initialization:**

Choose an initial iterate $\xi^{(0)}$ and convergence tolerance, $\varepsilon$.

Set $p = 0$. Choose $0 < \rho < 1$

**Algorithm:**

1. For each $k = 1, \ldots, Ng$ do
   a. Solve the optimization problem in (8) using multipliers $\xi^{(p)}$
   b. Obtain solution $\hat{x}^k(\xi^{(p)})$ and sensitivity $\nabla_\xi \hat{x}^k(\xi^{(p)})$

2. Check for convergence
   If $\phi(\xi^{(p+1)}) \leq \varepsilon$ then STOP

3. Compute the search direction $d\xi^{(p)}$ using (11)

4. Find the step length to move along $d\xi^{(p)}$
   a. Set $\alpha = 1$
   b. While (13) is not satisfied
      Set $\alpha = \rho\alpha$

5. Update step
   a. Set $\xi^{(p+1)} = \xi^{(p)} + \alpha d\xi^{(p)}$
   b. Set $p = p + 1$
   c. Goto Step 1.

**FIG. 4**

EP 2 770 599 B1

## Data:

A decomposition of graph into sub-networks $(N^k, E^k)$ for $k = 1, \ldots, Ng$.

## Initialization:

Choose an initial iterate $\xi^{(0)}$, initial smoothing parameter $\tau$ and convergence tolerance, $\varepsilon$. Set $p = 0$. Choose $0 < \rho < 1$ and $0 < \delta$.

## Procedure:

1. For each $k = 1, \ldots, Ng$ do
   a. Solve (14) using multipliers $\xi^{(p)}$ and smoothing parameter $\tau^{(p)}$
   b. Obtain solution $\hat{x}^k(\xi^{(p)}; \tau^{(p)})$ and sensitivity $\nabla_\xi \hat{x}^k(\xi^{(p)}; \tau^{(p)})$

2. Check for convergence
   If $\phi(\xi^{(p)}; 0) \leq \varepsilon$ then STOP
   ElseIf $\phi(\xi^{(p)}; \tau^{(p)}) \leq \delta \tau^{(p)}$ then Decrease $\tau^{(p)}$. Set $p = p + 1$. Goto Step 1.

3. Compute the search direction $d\xi^{(p)}$ using (16)

4. Find the step length to move along $d\xi^{(p)}$
   a. Set $\alpha = 1$
   b. While (18) is not satisfied
      Set $\alpha = \rho\alpha$

**FIG. 5**

5. Update step
   a. Set $\xi^{(p+1)} = \xi^{(p)} + \alpha d\xi^{(p)}$
   b. Set $p = p + 1$
   c. Goto Step 1.

EP 2 770 599 B1

**EP 2 770 599 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

*   US 6625520 B

### Non-patent literature cited in the description

*   Global optimization of Optimal Power Flow using a branch & bound algorithm. **GOPALAKRISHNAN A et al.** 2012 50TH ANNUAL ALLERTON CONFERENCE ON COMMUNICATION, CONTROL, AND COMPUTING. ALLERTON HOUSE, 01 October 2012